# EUROPEAN PATENT APPLICATION

(11) **EP 3 779 826 A1**
(43) Date of publication of application: **17.02.2021**
(21) Application number: 19192177.4
(22) Date of filing: 16.08.2019
(51) Int. Cl.: G06Q 20/32, G06Q 20/40, G06Q 20/38, G06Q 20/42

(54) **IOT DEVICES**

(71) Applicant: Mastercard International Incorporated, Purchase NY 10577 (US)
(72) Inventor: DUFFY, Colum, Richmond, TW9 2JE (GB); HAMDAM, Husham, Croydon, Surrey CR0 5BP (GB); JOSE, Sherene Sera, London, SW15 3HW (GB); TIERNEY, John, Merseyside, Cheshire CH60 7TF (GB)
(74) Representative: Richardson, Mark Jonathan

(57) **Abstract**

A method of performing transactions using an Internet of Things (IoT) device, the method comprising: providing a payment application on the IoT device; provisioning a payment card within the payment application on the IoT device in order to allow the IoT device to operate as a payment device; initiating a transaction with a merchant using the payment card within the payment application; sending transaction data comprising payment card data relating to the payment device to the merchant; sending a device identifier for the IoT device, for use in identifying the IoT device as an IoT device, to the merchant.

## Description

### TECHNICAL FIELD

The present disclosure relates to Internet of Things (loT) devices. In particular, the disclosure relates to provisioning loT devices such that they can autonomously perform transactions. The disclosure relates to a method of performing transactions using an loT device, an loT device for performing transactions, a method of performing transactions on a server and a server for performing transactions.

### BACKGROUND

The Internet of Things (loT) is defined as a network of objects or "things" embedded with electronics, software, sensors and network connectivity which enables these objects to collect and exchange data. There is perceived to be a huge market opportunity for loT devices which could be worth trillions of dollars.

IoT devices can be classified into two general categories:
- Non-payment capable devices e.g. devices performing monitoring, tracking etc.
- Transaction capable devices e.g. wearables, home appliances, connected cars, etc.

Most loT devices deployed today are non-transaction capable devices with only some wearables supporting transactions. IoT devices supporting transactions can be divided into two categories:
- Devices that perform transactions as a result of cardholder action/request
- Devices that perform transactions autonomously as a result of an event occurring e.g. fridge ordering food/drink, printer ordering ink or spare part, car paying at a toll etc.

Payment cards such as credit cards and debit cards are very widely used for all forms of financial transaction. A typical payment card now contains an integrated circuit (making it a "chip card" or "smart card") which can be read by a smart card reader in a merchant POS (point of sale) terminal. Using this approach, a transaction is typically confirmed by a personal identification number (PIN) entered by the card user. Cards of this type typically operate under the EMV standard for interoperation of chip cards and associated apparatus (such as POS terminals and ATMs). ISO/IEC 7816 provides a standard for operation of cards of this type. Contactless payments are now possible between suitably enabled payment cards and merchant terminals by short range wireless technology using NFC protocols - under EMV, these are covered under the ISO/IEC 14443 standard. Payment cards and devices are provided under a transaction scheme (such as Mastercard, American Express or Visa) and the transaction mechanism is mediated by the transaction scheme infrastructure. EMV specifications that relate to contact and contactless payment protocols are publicly available at the EMVCo website (EMVCo is the industry body tasked with maintaining these specifications with the support of major transaction scheme providers) - https://www.emvco.com/document-search/ - and would readily be consulted by the person skilled in the art. Terminology relating to EMV technology not expressly defined in this document is referenced and defined in EMV specifications, as will be appreciated by the person skilled in the art.

Increasingly, transactions are made in a digital domain ("ecommerce" transactions). Contactless payments may for example be performed by a mobile phone running a mobile payment application and communicating with a POS terminal using the same protocols as a contactless card. The term "payment device" is now a generic term to describe a device that can perform contactless transactions with a terminal. A payment device may be a traditional payment card or a device (e.g. a smartphone or a smartwatch) that has been provisioned with a digital wallet that contains one or more digitised payment cards. It is increasingly common, however, to transact with payment devices online, for example at a merchant website. Transactions will then be fed into the transaction scheme by a payment service provider providing an internet gateway to the merchant.

Online transactions have generally been treated as "Cardholder Not Present" (CNP) transactions (other examples would be credit card payments made by telephone), which create security issues as a full EMV protocol contact or contactless interaction may not be available and there is no proximity between payment device and POS terminal to provide an additional measure of security. A normal approach to providing additional customer verification is to provide a card verification code printed on the card. Additional technologies have also been developed to improve security and efficiency of transactions carried out in the digital domain - particularly relevant are tokenisation via a mobile wallet and the use of stored card details.

IoT devices may be provisioned to perform Cardholder-Not-Present transactions on-behalf the cardholder (known as autonomous loT devices). However, such devices may be vulnerable to fraud attacks or performing transactions that should not be performed. Additionally, preventing fraud attacks is made more challenging because some loT devices will be located within the cardholder domain such as home whilst others will not be within the cardholder domain such as a car.

Transactions performed by such autonomous devices need to be treated differently from traditional transactions because of their vulnerability and to ensure cardholder, Issuer and merchant confidence that such devices performing transactions on behalf of the cardholder can be trusted. The present disclosure aims to provide transaction enabled Internet of Things devices with improved security/fraud capabilities.

### SUMMARY OF THE DISCLOSURE

According to a first aspect of the present disclosure there is provided a method of performing transactions using an Internet of Things (loT) device, the method comprising: providing a payment application on the loT device; provisioning a payment card within the payment application on the loT device in order to allow the loT device to operate as a payment device; initiating a transaction with a merchant using the payment card within the payment application; sending transaction data comprising payment card data to the merchant; sending a device identifier for the loT device, for use in identifying the loT device as an loT device, to the merchant.

The present disclosure provides a method for performing transactions using an loT device in which a payment application (e.g. a digital wallet) is provided to the loT device and a payment card is then provisioned within the wallet.

Provisioning of the payment card into the payment application may take place as part of a digitisation process in which a digitisation entity is used to provide a digitised card in the payment application. The digitised payment card may comprise a version of a cardholder's payment card that is provisioned without tokenisation (e.g. the actual PAN may be provisioned into the payment application) or a tokenised version of the payment card may be provisioned. In further instances, where a physical payment device doesn't exist, a virtual payment card may be provisioned into the payment application.

Once the payment application has been provisioned the loT device may then initiate a transaction with a merchant (or a merchant server) using the provisioned payment card. Payment card data and a device identifier, which identifies the loT device as an loT device to the merchant, may then be sent.

The method according to the present invention makes it easier to identify transactions performed by autonomous payment devices within loT devices that might otherwise be more vulnerable to fraud attacks.

As discussed below in more detail, a profile for an loT device may be created based on the transactions that the loT device performs in order to enable fraud or unusual transactions to be identified. Additionally the user may set payment limits, rules and define trusted merchants within the loT device profile. Providing more control over such loT devices results in increased trust in the autonomous device use cases as backend system fraud checks may more easily be undertaken.

The payment card that is provided within the payment application may conveniently be a tokenised payment card. In such instances providing a payment card on the loT device may comprise providing a digitised payment card in the payment application and providing the digitised payment card may comprise: receiving, from a digitisation entity, tokenised payment card data, relating to the payment card, in the form of a token and storing the tokenised payment card in the payment application on the loT device.

Sending a device identifier may comprise sending a transaction flag in the transaction with the merchant, the transaction flag indicating that the transaction has originated from an loT device. The transaction flag may conveniently be included within input data used to calculate a transaction cryptogram sent from the loT device to the merchant.

Conveniently, an Internet of Things (loT) server may be arranged to store a profile for the loT device, the profile comprising a set of rules specifying allowable transaction types for the loT device, wherein the device identifier is sent in order to allow the loT server to retrieve the profile for the loT device.

According to a further aspect of the present disclosure, there is provided an Internet of Things (loT) device for performing transactions comprising: a payment application configured to perform transactions with a merchant, the payment application comprising a payment card to allow the loT device to operate as a payment device; a processor arranged to use the payment application to initiate a transaction with the merchant using the payment card within the payment application; an output arranged to send transaction data comprising payment card data to the merchant and to send a device identifier for the loT device, for use in identifying the loT device as an loT device, to the merchant.

According to a still further aspect of the present disclosure there is provided a method for performing transactions on a server, the method comprising: receiving transaction data relating to a transaction between a merchant and a payment device; analysing the transaction data for the presence of a device identifier; determining from the device identifier if the payment device is an Internet of Things (loT) device and, in the event that the payment device is an loT device; comparing the received transaction data against an loT device profile to determine if the transaction meets loT device profile rules; and, in the event that the transaction meets the loT device profile rules, forwarding the transaction data to an issuer entity.

The method according to the above aspect of the present disclosure provides a method to be carried out on a (backend) server when receiving transaction data relating to a transaction between a merchant and a payment device. Received transaction data is analysed to determine the presence of a device identifier indicating that the payment device is associated with an loT device. In the event an loT device is identified as one of the parties in the transaction an loT device profile can be used to determine if the transaction meets defined transaction rules. In the event that the transaction meets the rules then the transaction data can be forwarded to an issuer entity.

The device identifier may comprise a transaction flag, the transaction flag identifying the transaction as originating from an loT device. The transaction flag may be contained within input data used to calculate the transaction cryptogram and the method may comprise validating the transaction cryptogram such that the value of the transaction flag can be validated.

The transaction data may comprise tokenised payment card data in the form of a token and analysing the transaction data may comprise identifying that the token sits within a range of tokens allocated by a token issuing entity (e.g. an issuer) to loT devices.

The device identifier may comprise a device ID and the method may comprise using the device ID to look up the device type, e.g. by looking up the device identifier in a set of loT device profiles that are stored on or accessible to the server.

The method may comprise retrieving the loT device profile based on the received device identifier. It is noted that the loT server may construct the loT device profile overtime by monitoring the transactions performed by the loT device. In this way the profile does not necessarily have to be defined by a consumer/user.

Determining if the transaction meets the loT device profile rules may comprise one or more of: checking that the merchant is an approved merchant for the loT device; checking the transaction amount of the transaction is within an approved transaction limit; checking token usage conditions associated with a received token; checking for communications from other loT devices associated with the consumer/user.

As noted above, the device identifier may comprise a transaction flag. The presence of such a transaction flag within input data used to calculate a transaction cryptogram may also be used to validate the transaction flag value by the backend server (token service provider) which can then compare the requested transaction against the loT device's profile rules.

It is noted that the payment application within the loT device may be provisioned with a payment token that is associated with certain usage conditions that are stored in the loT device profile (e.g. the token may be restricted to a certain payment threshold, it may be limited to use with specific goods/services or it may be limited to specific merchants).

These usage conditions may be checked when determining if the transaction meets the loT device profile. The loT device profile rules may also require the server to collect data from other loT devices and use that data to determine if the transaction should be approved, declined or whether the cardholder needs to approve the transaction. For example, the loT server may collect information from an loT home security system and may determine that a cardholder is away for an extended period. Such a determination may mean that the loT server declines a certain transaction when it might otherwise normally be approved.

The method may comprise sending a transaction notification to a mobile device associated with the loT device. Such a transaction notification may comprise a message informing the cardholder that a transaction has taken place. Alternatively, such a transaction notification may require a cardholder to provide authorisation for a specific transaction.

The transaction data that is forwarded to an issuer entity may comprise an authorisation request for the transaction. The method may also further comprise receiving an authorisation response from the issuer entity and relaying transaction response to the loT device

According to another aspect of the present disclosure there is provided a server for performing transactions comprising: an input arranged to receive transaction data relating to a transaction between a merchant and a payment device; a processor arranged to analyse the transaction data for the presence of a device identifier; determine from the device identifier if the payment device is an Internet of Things (loT) device and, in the event that the payment device is an loT device; compare the received transaction data against an loT device profile to determine if the transaction meets loT device profile rules; an output arranged, in the event that the transaction meets the loT device profile rules, to forward the transaction data to an issuer entity.

The present disclosure extends to a computer program comprising instructions which, when the program is executed by an Internet of Things device, cause the loT device to carry out a method of performing transactions.

The present disclosure extends to a computer program comprising instructions which, when the program is executed by a server, cause the server to carry out a method of performing transactions.

A computer-readable storage medium comprising instructions which, when executed by a server, cause the server to carry out the method of performing transactions.

A computer-readable storage medium comprising instructions which, when executed by an Internet of Things (loT) device, cause the loT device to carry out the method of performing transactions.

### BRIEF DESCRIPTION OF THE DRAWINGS

One or more embodiments of the disclosure will now be described, by way of example only, with reference to the accompanying drawings, in which:
Figure 1 shows schematically an overview of a transaction system in accordance with an embodiment of the present disclosure;
Figure 2 shows a flow chart of method of use of the system of Figure 1;
Figure 3 shows schematically part of the transaction system of Figure 1 during a provisioning phase in accordance with an embodiment of the present disclosure;
Figure 4 is a flow chart of a method of provisioning in the system of Figure 3;
Figure 5 shows schematically the system of Figure 1 during a transaction;
Figure 6 shows a method of making a transaction in accordance with an embodiment of the present disclosure;
Figure 7a shows an loT device and Figure 7b shows a server according to an embodiment of the present disclosure;
Figure 8 shows schematically part of the transaction system of Figure 1 during a discovery phase;
Figure 9 shows a method of discovering an loT device in accordance with an embodiment of the present disclosure;
Figure 10 shows a method of setting up a profile in accordance with an embodiment of the present disclosure.

### DETAILED DESCRIPTION

General and specific embodiments of the disclosure will be described below with reference to the Figures.

The "Internet of Things" (loT) generally refers to the concept of connecting devices to the Internet and each other. Potentially any device may be made Internet capable and in the context of the present application loT device may include, without limitation, mobile phone devices, wearable devices (such as smartwatches), TVs, washing machines, printers, fridges, vehicles, smart glasses, headphones etc.

The systems and methods described herein allow loT devices to perform autonomous transactions. An loT server (or "backend" server) facilitates provisioning of loT devices with a payment application 103 (a "digital wallet"), provisioning one or more payment cards into the payment application and performing transactions between a merchant (or a merchant server) and an loT device.

### OVERVIEW

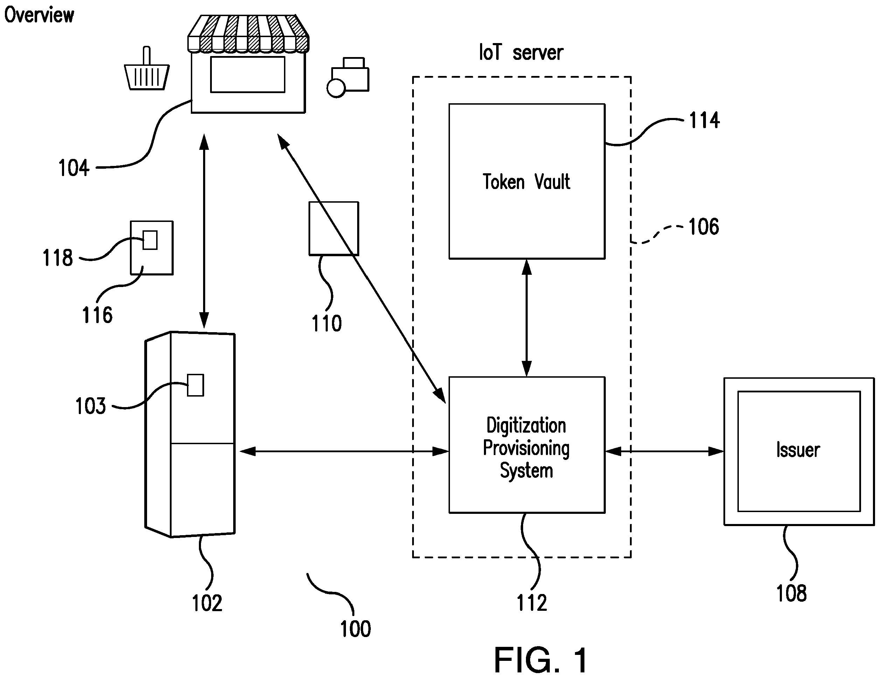

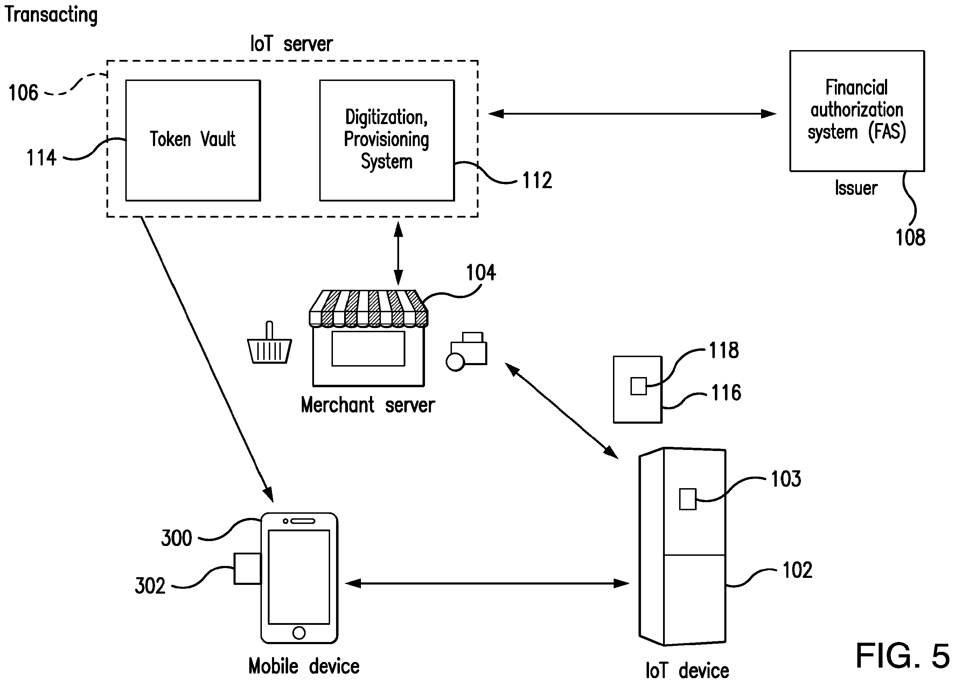

Figure 1 illustrates an exemplary system 100 in which one or more aspects of the present disclosure are described. The system 100 includes an loT device 102 (in Figure 1 an Internet enabled refrigerator is shown but it is to be appreciated that this could be any loT device) comprising a payment application 103, a merchant 104 (or merchant server), an loT server 106 (which as described below may be used to provision a digital wallet/payment application on the loT device and to handle any tokenization/detokenization processes and to perform security checks on transactions initiated by the loT device 102), and an issuer entity 108 associated with a cardholder (not shown) who has provisioned (via the loT server 106 or otherwise) one or more payment cards to the loT device 102 (such that the digital wallet comprises a digitised payment card). An acquirer entity 110 that is associated with the merchant 104 is also shown in Figure 1 (it is noted that the acquirer entity is omitted for clarity purposes in Figure 5 but it is to be appreciated that the acquirer entity is present in that figure as well).

The loT server 106 comprises a processor in the form of a digitization & provisioning system 112. The digitization & provisioning system 112 (which may also be referred to herein as a token service provider) is arranged to provision a cardholder's payment card into a payment application within the loT device 102. The token service provider may also tokenise payment card data and issue tokens to the loT device 102. The tokens may take the form of a token PAN (primary account number), or a token PAN and a token expiry date.

A token vault 114 is provided within the loT server 106 and the vault comprises a secure processor and storage area where issued tokens and the PANs they represent are stored securely. Security is paramount as the token vault is the only area in which the token can be mapped back to a cardholder's original payment card details.

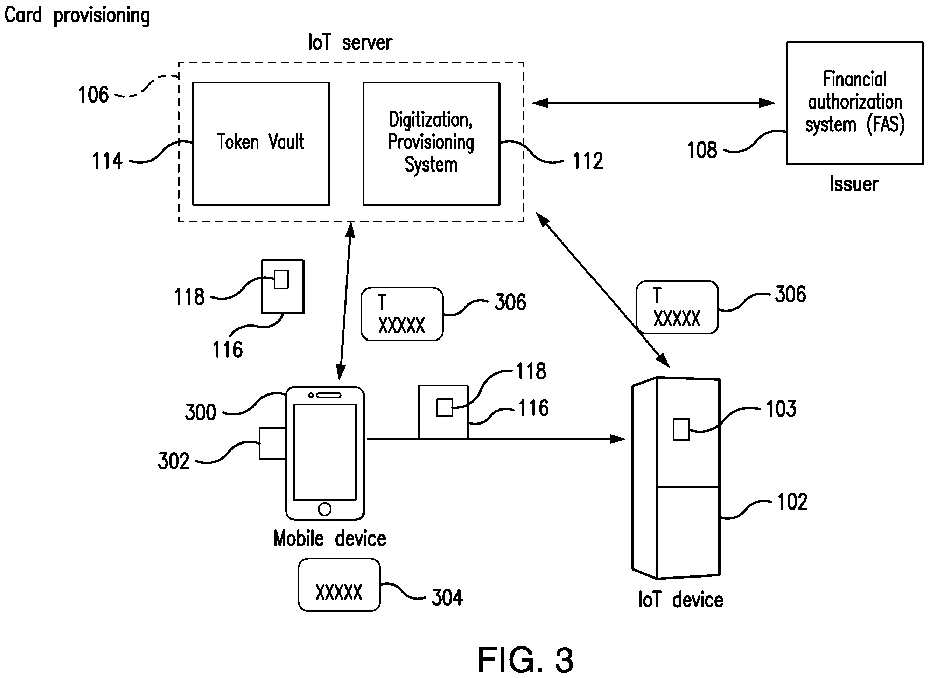

The loT device 102, merchant 104, loT server 106, issuer 108, acquirer 110, digital provisioning system 112 and token vault 114 are each coupled to and in communication with one or more networks which are represented by the solid arrows in Figure 1. The networks may comprise any of the following: wired or wireless networks, a local area network, a wide area network, a mobile communications network, the Internet. [It is noted that in Figures 3, 5 and 8 networks between various components within the system are again represented by solid arrows.]

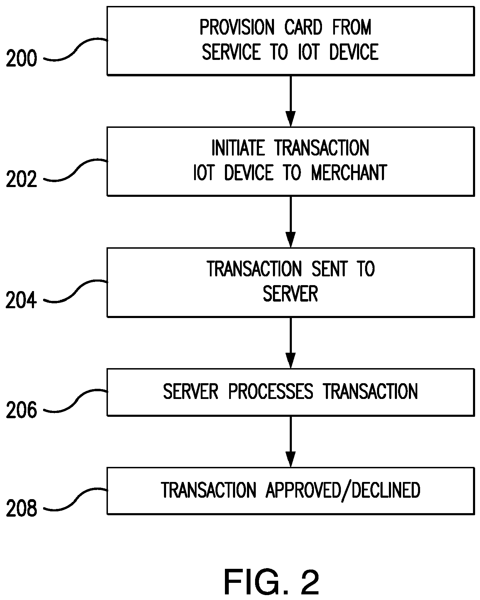

A method of use of the system of Figure 1 is shown in Figure 2.

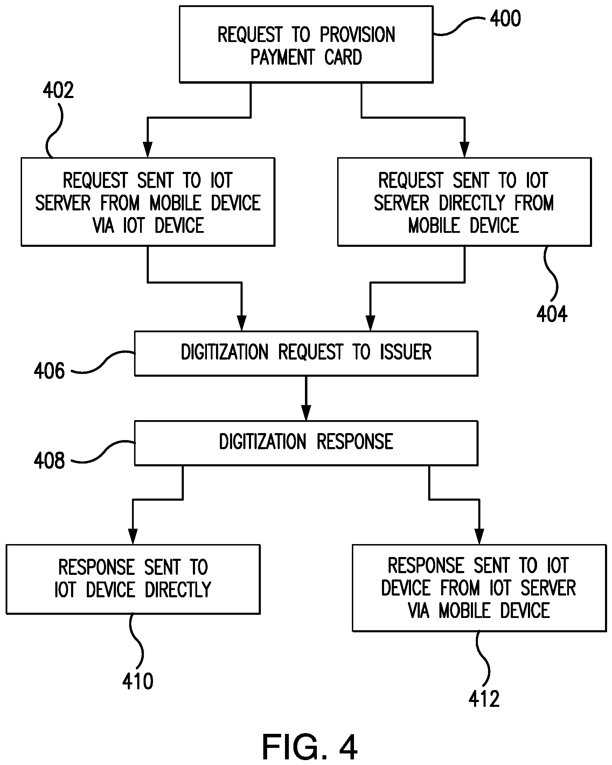

In step 200 the loT device 102 is provisioned with one or more digitized/tokenized payment cards from the loT server 106 [see further description of the provisioning process in relation to Figures 3 and 4 below].

In step 202 the loT device 102 initiates a transaction with the merchant 104. The transaction may be initiated due to an event occurring (For the particular loT device shown in Figure 1, this event may, for example, be the fridge determining that certain items need to be re-ordered). The loT device 102 may initiate the process of placing an order using a pre-selected merchant or loT selected merchant based on price/location/delivery or other criteria.

Since the transaction being performed is not initiated by the cardholder, the loT device 102 includes an loT identifier 116 as part of the transaction to indicate that it is an autonomous device. In the embodiment shown in Figure 1, the loT device includes an identifier 116 by setting a flag 118 as part of the input data used to calculate a transaction cryptogram to indicate it is an autonomous device transaction. Additional information such as device type, location information (such as Geo-location, Wi-Fi access point name/ID, IP address, mobile network location information, list of visible nearby access points) may also be included in the information sent to the merchant 104 during the transaction. [Further details of the transaction process are described in reference to Figures 5, 6 and 7 below.]

In step 204 details of the transaction are sent from the merchant 104 via the acquirer 110 to the loT server 106.

In step 206 the loT server 106 processes the transaction received from the merchant 104. During step 206 the token service provider 112 is arranged to detokenize the transaction (if tokenization has been used) by retrieving details of the linked to the token from the token vault 114 and to perform validation of Token PAN/Expiry Date values, any token domain controls and validation of a transaction cryptogram. The loT server 206/token service provider 112 is further arranged to determine the presence of the loT identifier 116 in the form of a transaction type flag 118 and to thereby determine that the transaction has originated from an loT device.

Determining the transaction has originated from an loT device 102 may result in the token service provider 112 performing additional security checks on such transactions to ensure the device has not been compromised/cloned. Such security checks may be enhanced by the loT server 106 storing data from each transaction performed by the autonomous device 106 (using the provisioned token) such as the location of the device 102, transaction amount, merchant category code, frequency of transaction etc. Such data may be included within a profile for the autonomous loT device 102. This profile may include a device type for the loT device, whether it's within the cardholder environment (e.g. home) or not (e.g. car), the types of transactions it should be performing and how often, and an expected range of value of the transactions that the loT device is configured to take part in. This enables the loT server 106/token service provider 112 to detect, for example, if a fridge tries to order a holiday or a printer orders an expensive watch due to fraud or other reasons (for example badly implemented software or inconsistent rules definitions).

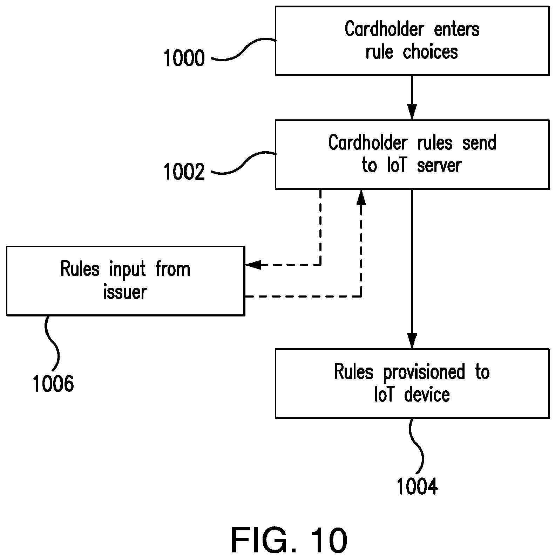

The loT server 106 may also interact with other loT devices to factor in additional data points (e.g., smart home security system indicating the family is on holiday prevents smart fridge from ordering perishables). Further description relating to the loT device profile is provided below in relation to Figures 10 and 11.

In step 208, the token service provider 112 either declines the transaction if the checks fail and informs the issuer or passes the transaction to the Issuer 108 with the results of the checks so that the Issuer can make the final decision to approve or decline the transaction.

### PROVISIONING

Figure 3 shows schematically part of the transaction system of Figure 1 during a provisioning phase in accordance with an embodiment of the present disclosure. Like reference numerals are used to denote like features with Figure 1 above. It is noted that in addition to the system components shown in Figure 1, Figure 3 includes a cardholder's mobile device 300 (e.g. phone or tablet). The mobile device 300 comprises an loT device app 302 that is used to provision at least one payment card 304 into the loT device payment application 103 in accordance with the method described below in relation to Figure 4. It is noted that although a mobile device in the form of a smartphone is depicted in the Figures the cardholder's device may also take the form of a desktop computer or a laptop.

It is noted that the process of provisioning a payment card into the payment application 103 may be repeated to provision multiple payment cards to the payment application 103, however only one digitised payment card may be selected as default for payment. Alternatively, if only one payment card is provisioned it is always used and the consumer has no choices to make about which digitised payment card to use unless the consumer decides to provision an alternative card to the loT device 102.

In the method described below in relation to Figure 4 the payment card 304 is tokenised and the tokenised card 306 is stored within the payment application 103 within the loT device 102. However, in alternative arrangements the payment card may be provisioned into the payment application without tokenisation (i.e. the actual payment card details may be utilised, e.g. actual PAN, and the device stored securely within the payment application. Further, in some instances the cardholder may have a virtual card and no actual physical payment card may exist. In such instances the virtual card may be provisioned, with or without tokenisation, into the payment application.

In step 400 a cardholder enters payment card details for a payment card 304 that they wish to provision into the loT device 102 into the provisioning app 302 on their mobile device 300. A digitization/tokenization request is then sent to the loT server 106 either via the loT device 102 (step 402) or directly from the mobile device 300 to the loT server 112 (step 404). This request comprises the payment card details.

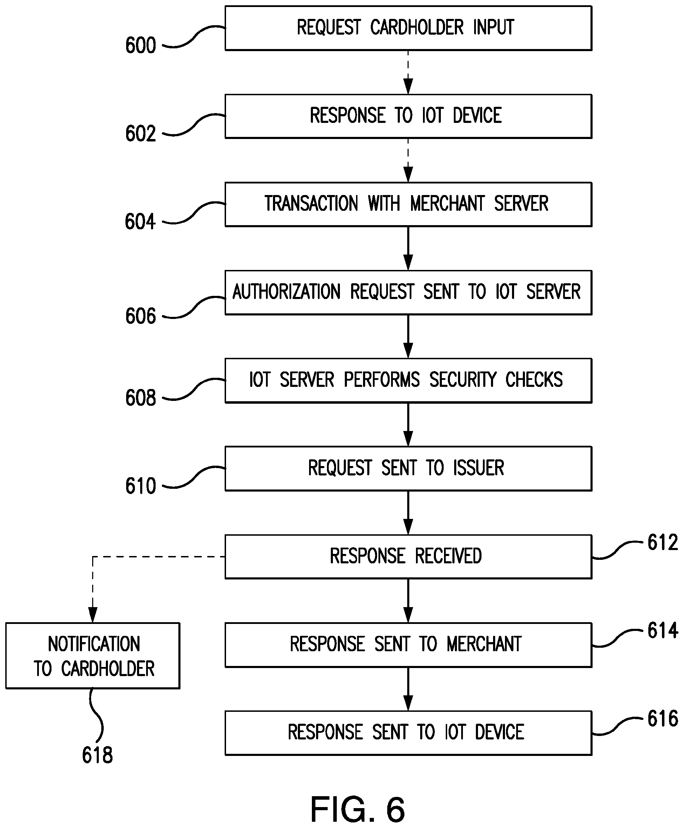

The request may also include an loT identifier 116 to indicate that the request has originated from an loT device 102. In the embodiment shown in Figure 3, the loT device includes an identifier 116 by setting a transaction type flag 118. Optionally other information such as loT device type etc. may be included in the request. Alternatively, this information may be omitted from the digitisation request and included instead during a transaction (see Figures 5 and 6 below).

In step 406 the loT server digitises the payment card details and issues a token to represent the payment card. In step 408 the loT server 106 may request that the issuer 108 approve the digitisation request. Where present the loT server 106 may use the loT identifier 116 to issue a token within a certain numerical range of tokens reserved for loT devices. It is noted that in alternative arrangements the issuer may issue tokens and in such instances the loT server 106 may send a digitisation request to the issuer 108 such that the issuer can issue a token which is then returned to the loT server.

The token representing the digitised/tokenised payment card may then be returned to the payment application 103 on the loT device 102 either directly from the loT server 106 (step 410) or via the mobile device 300 to the loT device 102 (step 412).

### TRANSACTIONS

Figure 5 shows schematically the system of Figure 1 during a transaction. Like reference numerals are used to denote like features. In addition to the features of Figure 1, Figure 5 additionally shows the cardholder's mobile device. Figure 6 describes a method of making a transaction within the system of Figure 5 in accordance with an embodiment of the present disclosure.

It is noted that the loT device 102 may initiate a transaction of its own accord in accordance with certain rules (e.g. in the example of the fridge shown in Figure 5 a rule may specify buying milk when the fridge detects that the amount of milk is below a certain quantity). In such cases the method of performing a transaction would commence with step 604 below. In an alternative configuration the loT device 102 may request confirmation from the cardholder first before making the transaction with the merchant. This alternative configuration commences at step 600 below.

The method described in relation to Figures 5 and 6 is for a transaction configuration in which the loT device sends an loT identifier 116 in the form of a transaction flag 118 during the transaction and in which the payment application 103 on the loT device comprises a tokenised payment card 306.

In step 600, the loT device 102 determines that it should make a transaction and sends a request for consumer input before proceeding. As shown in Figure 5 this request for input is sent to the cardholder's mobile device (in one configuration the provisioning app 302 above may additionally allow the cardholder to interact with the loT device 102).

In step 602 the cardholder responds to the loT device's request and authorises the transaction and the loT device continues with the transaction at step 604 below. [As noted above in certain configurations the loT device 102 may be configured to start the transaction process at step 604 and the cardholder interaction above is not needed.]

In step 604 the payment application 103 begins a transaction with the merchant server 104. Such a transaction would be determined by the transaction rules configured on the loT device 102 as described below in relation to Figure 10.

As part of the transaction the payment application 103 creates a unique cryptogram that includes in the cryptogram input data a flag 118 that indicates that the transaction originates from an loT device 102. In an alternative arrangement the payment application may call a cloud based API to generate a cryptogram that includes the flag 118 in the cryptogram calculation input data which is then returned to the loT device 102 in order to proceed with the transaction.

EMV Book 2 for Application Cryptogram generation recommends a minimum set of data elements for the generation of an application cryptogram. In order to create a flag 118 that the transaction has originated from an loT device, an additional field over and above the minimum required may be included in a particular payment scheme that is actually implemented. One or more bits within this additional field may then be used to indicate that the transaction has originated from an loT device. Alternatively a new field may be included in the input data used to calculate the transaction cryptogram.

In step 606 the merchant server 104 sends an authorisation request, which includes the token relating to the tokenised payment card 306 and the cryptogram generated in step 604, to the loT server 106.

In step 608, the token service provider 112 detokenises the received token as described in relation to step 206 above, in order to validate the token PAN/expiry date and also to validate the application cryptogram. The presence of the transaction flag 118 within the input data used to calculate the cryptogram is also used to validate the transaction flag value by the token service provider which can then compare the requested transaction against the loT device's profile rules. For example, the profile rules may specify which merchant or merchants the loT device is authorised to transact with and the transaction may be rejected if the loT is attempting to transact with a merchant who is not on the approved list. Additionally, the rules may specify a range of transaction amounts or frequency of transaction that the loT is permitted to make. The rules may also include token domain controls (as described later) that also need to be met.

Assuming that the loT server 106/token service provider 112 determines that the payment card details are valid, all profile rules have been met (including that any token domain controls are met), in step 610 sends a transaction authorisation request to the issuer 108 which then sends, in step 612 an authorisation response back to the loT server 106. This response may then be sent in step 614 from the loT server to the merchant server 104 and then, in step 616, from the merchant server 104 to the payment application 103 on the loT device 102.

In step 618 the loT server may, depending on how the cardholder has configured transactions involving the loT device to take place, send the loT app 302 on the mobile device 300 a notification that the transaction has taken place. If, in the previous step the loT server 106/token service provider 112 determines that the transaction does not fully comply with the profile rules then, in step 618, the loT server may prompt the cardholder via the loT device application 302 on the mobile device 300 to approve the transaction.
In the above description of the method of Figure 6 a unique cryptogram is created in the loT device payment application 103 for each transaction undertaken with the merchant server 104 which includes a transaction flag 118 in the input data used to calculate the cryptogram. There are however alternative methods for providing an loT identifier 116 to the loT server 106, such as the use of token ranges and the provision of alternative loT identifier information.

As described above in relation to Figure 4 the issuer 108 may issue tokens within a certain numerical range of tokens reserved for loT devices. If the token range is chosen suitably the backend system/loT server 106 may not require any additional information about the loT device 102 in the authorisation request message if it can assume that the information used during card tokenisation is sufficient and still valid. In this case, step 608 above would comprise the loT server 106 determining from the token range of the token from the merchant server 104 that the transaction has originated from an loT device 102. Effectively the loT server 106 would use the token range as the loT identifier 116.

It is noted that the use of token ranges may not be a preferred solution for determining that a transaction has originated from an loT device 102 because sufficient tokens would need to be reserved for use with loT devices without specific knowledge as to how many of such tokens would actually be needed. This inefficient use of token ranges may be avoided by the use of a transaction flag 118 as described above or by the use of other information such as the inclusion of a device type identifying the originating transaction device (the loT device 102). Similarly the use of location information may be sufficient to identify an loT device in step 608. The transaction flag as described above is included in the input data for cryptogram generation. In alternative arrangements the flag may be sent without including it in the cryptogram calculation.

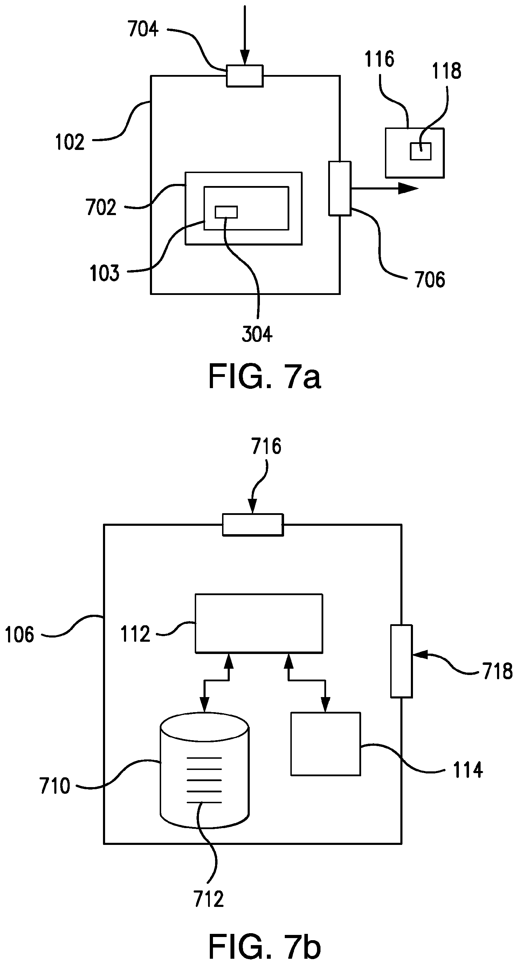

Figure 7a shows an loT device 102 according to embodiments of the present disclosure. The loT device comprises a payment application 103 running on a processor 702. The payment application comprises at least one provisioned payment card 304. The loT device further comprises an input 704 and an output 706. As described herein the input 704 may be configured to receive data from a variety of sources including but not limited to the loT server 106, merchant 104, mobile device 300 and loT device vendor server 802. Data received at the input 704 may comprise, at least, one or more of: a payment application 103 from the loT device vendor server 802, payment cards 304 that are provisioned into the payment application 103; cardholder inputs (e.g. to select between multiple provisioned payment cards or to respond to a request for cardholder input in authorising a transaction); tokenised card data from the server 106, transaction related data from the merchant 104. The output 706 may be configured to send data to a variety of destinations including, but not limited to: the loT server, merchant 104, loT device vendor server 802 and mobile device 300. Data output from the output 706 may comprise, at least one or more of: requests to tokenise a payment card 304, data input by a cardholder (e.g. a cardholder response to an authorisation request), transaction data with the merchant 104.

Figure 7b shows a server 106 for performing transactions. The loT server comprises a processor in the form of a digitization and provisioning system 112 and a token vault 114. The server shown in Figure 7b additionally comprises a data store 710 comprising a plurality of loT device profiles 712, each profile 712 corresponding to a different loT device 102. It should be appreciated however that the loT device profiles may be stored elsewhere, e.g. with the issuer 108 or within the payment network.

The server 106 further comprises an input 716 and an output 718 for sending and receiving data from the loT device 102, merchant 104, issuer 108, acquirer 110, and mobile device 300.

### DISCOVERY

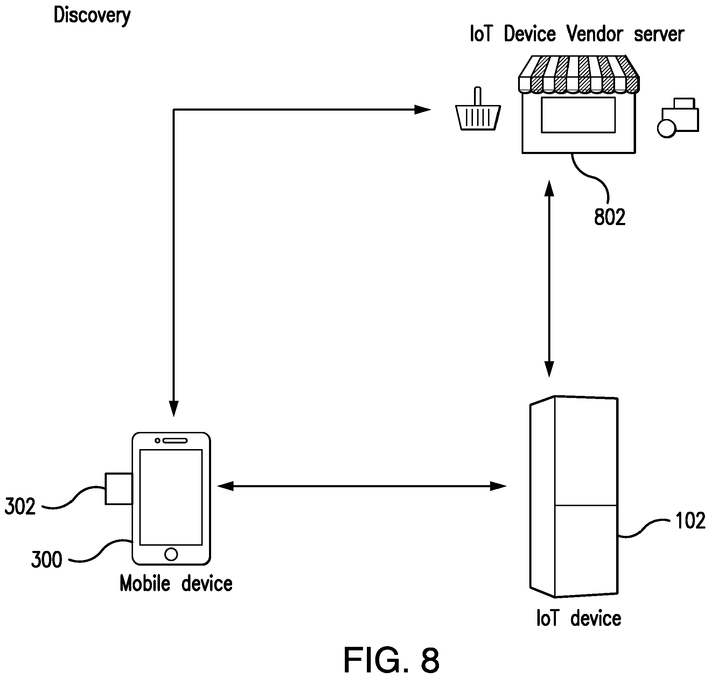

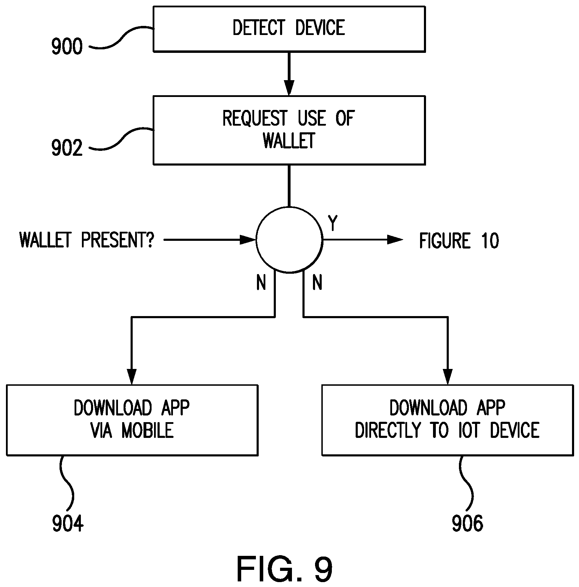

Figure 8 shows schematically part of the transaction system of Figure 1 during a discovery phase and depicts the cardholder's mobile device 300, loT device 102 and additionally an loT device vendor server 802 that is used during the provisioning process which is described in relation to Figure 9.

In step 900, the loT device application 302 that has been previously downloaded to the consumer mobile device 300 (e.g. phone or tablet) is used to detect loT devices 102 in the vicinity of the mobile device 300. Discovery may use Bluetooth or Wi-Fi direct or another suitable short range discovery method.

In step 902 the loT device application 302 requests use of a payment application 103 on the loT device 102. In the event that the loT device 102 already comprises such a payment application 103 then the loT device application 302 may move to a profile set up phase as described below in relation to Figure 10.

If the loT device 102 does not have a digital payment application 103 already loaded, the loT device app 302 requests for the loT device 102 to download it (either via the mobile device (step 904) or directly by the loT device (step 906)) from the loT device vendor server 802. The payment application 103 downloaded to the loT device 102 includes digital wallet functionality

It is noted that the loT device application 302 on the mobile device 300 may be used to discover the payment application 103 on different loT devices (using the same process as described above in relation to Figure 9), provision the payment application 103 according to the process described in relation to Figure 4 and configure the payment app 103 on different loT devices 102 in accordance with the method described below in relation to Figure 10. In more detail it is noted that:
As described in relation to Figure 9, through the discovery process on the mobile device 300 (or an loT device companion application) a user can wirelessly (through Bluetooth, Direct Wi-Fi or NFC) discover different loT devices or the associated loT device capable of performing payment using a payment application.

A generic discovery application 302 could be capable of discovering different types of payment operating environments e.g. Secure Element, Trusted Executed Environment and an OS capable of running a cloud based solution.

A dedicated loT device discovery application 302 e.g. Samsung companion Application, may be preconfigured to detect a Samsung loT device (e.g. Fridge) and either download the applicable payment application for the fridge or check if the pre-installed payment application (if applicable) needs to be updated.

Figure 3 shows schematically part of the transaction of Figure 1. In addition to provisioning the payment application 103 on the loT device 102 with a payment card/token it is additionally possible for the mobile application 302 to configure a profile for the loT device 102 and, for example, to set limitations/controls for each provisioned card e.g.
- Set the merchant to be used e.g. only orders to Canon
- Set the maximum amount for each transaction e.g. Max £20 / transaction
- Set the maximum frequency e.g. Max 3 transactions / month
- Set Authentication mode e.g. Request user authentication via the mobile application for each transaction or transactions above certain limit or transactions not compliant with defined rules.

The mobile device loT device application 302 may create transaction rules (within an loT device profile) at one or more of: the loT server 106 (backend system); the issuer 108; the payment network. It is further noted that transaction rules also may be automatically defined & configured over time by the loT server 106/tokenisation system 112, Issuer 108 or payment network based on transactions performed by the loT device 102. Transaction rules may therefore be defined using a combination of any of the following: consumer/cardholder input; Issuer requirements; automated rules; loT server/Backend System requirements.

In Figure 10, step 1000 comprises a cardholder interacting with the loT device app 302 on their mobile device to supply transaction rule choices for use on/by the loT device 102. It is noted that step 1000 may be optional and the rules may be defined at the loT server level.

In step 1002 the cardholder selected rules are sent to the loT server 106 where a profile is created linking the loT device 102 details to the cardholder defined rules.

In step 1004 the loT server 106 provisions the transaction rules to the loT device 102. This may either be done via a direct connection between the loT device 102 and loT server 106. Alternatively, the rules may be provisioned by sending them to the loT device 102 via the mobile device 300.

In an optional step (step 1006), a request may be sent from the loT server 106 to the issuer 108 for transaction rules input and any response incorporated into the profile stored on the loT server 106.

It is noted that the profile may define that the tokenised payment card data is restricted in its usage conditions. By incorporating usage conditions into the tokenised payment card data the security of transactions using the cardholder's payment card may be increased since the tokenised payment card data will only be able to be used under certain circumstances. For example, the tokenised payment card data may be for "one time" use only.

Conveniently, the restricted usage conditions may comprise one or more of: time limited tokenised payment card data (e.g. the tokenised payment card data needs to be used within a predetermined time window before it expires); tokenised payment card data that is linked to a specific merchant; tokenised payment card data that is linked to a specific domain; tokenised payment card data that is linked to a loT device initiated transaction (e.g. the tokenised payment card data may only be used once); tokenised payment card data that is linked to a single loT device initiated transaction and subsequent merchant initiated transaction (e.g. an loT device might use the tokenised payment card data to sign up to a subscription service and the merchant may subsequently be able to process the tokenised payment card data according to a subscription schedule).

Many modifications may be made to the above examples without departing from the scope of the present disclosure as defined in the accompanying claims.

## Claims

1. A method of performing transactions using an Internet of Things (loT) device, the method comprising:
providing a payment application on the loT device;
provisioning a payment card within the payment application on the loT device in order to allow the loT device to operate as a payment device;
initiating a transaction with a merchant using the payment card within the payment application;
sending transaction data comprising payment card data relating to the payment device to the merchant;
sending a device identifier for the loT device, for use in identifying the loT device as an loT device, to the merchant.

2. A method as claimed in Claim 1, wherein providing a payment card on the loT device comprises providing a digitised payment card in the payment application and providing the digitised payment card comprises:
receiving, from a digitisation entity, tokenised payment card data, relating to the payment card, in the form of a token and
storing the tokenised payment card in the payment application on the loT device.

3. A method as claimed in Claim 1 or Claim 2, wherein sending a device identifier comprises sending a transaction flag in the transaction with the merchant, the transaction flag indicating that the transaction has originated from an loT device.

4. A method as claimed in Claim 3, wherein the transaction flag is included within the input data used to calculate a transaction cryptogram sent from the loT device to the merchant.

5. A method as claimed in Claim 1 or Claim 2, wherein an Internet of Things (loT) server is arranged to store a profile for the loT device, the profile comprising a set of rules specifying allowable transaction types for the loT device, wherein the device identifier is sent in order to allow the loT server to retrieve the profile for the loT device.

6. An Internet of Things (loT) device for performing transactions comprising:
a payment application configured to perform transactions with a merchant, the payment application comprising a payment card to allow the loT device to operate as a payment device;
a processor arranged to use the payment application to initiate a transaction with the merchant using the payment card within the payment application;
an output arranged to send transaction data comprising payment card data to the merchant and to send a device identifier for the loT device, for use in identifying the loT device as an loT device, to the merchant.

7. A method for performing transactions on a server, the method comprising:
receiving transaction data relating to a transaction between a merchant and a payment device;
analysing the transaction data for the presence of a device identifier;
determining from the device identifier if the payment device is an Internet of Things (loT) device and, in the event that the payment device is an loT device;
comparing the received transaction data against an loT device profile to determine if the transaction meets loT device profile rules;
and, in the event that the transaction meets the loT device profile rules, forwarding the transaction data to an issuer entity.

8. A method as claimed in Claim 7, wherein the device identifier comprises a transaction flag, the transaction flag identifying the transaction as originating from an loT device.

9. A method as claimed in Claim 8, wherein the transaction flag is contained within input data used to calculate the transaction cryptogram and the method comprises validating the transaction cryptogram such that the value of the transaction flag can be validated.

10. A method as claimed in any one of Claims 7 to 9, wherein the transaction data comprises tokenised payment card data in the form of a token and analysing the transaction data comprises identifying that the token sits within a range of tokens allocated by a token issuing entity to loT devices.

11. A method as claimed in any one of Claims 7 to 9, wherein the device identifier comprises a device ID and the method comprises using the device ID to look up the device type.

12. A method as claimed in any one of Claims 7 to 11, comprises retrieving the loT device profile based on the received device identifier.

13. A method as claimed in any one of Claims 7 to 12, determining if the transaction meets the loT device profile rules comprises one or more of: checking that the merchant is an approved merchant for the loT device; checking the transaction amount of the transaction is within an approved transaction limit; checking token usage conditions associated with a received token; checking for communications from other loT devices.

14. A method as claimed in any one of Claims 7 to 13, comprising sending a transaction notification to a mobile device associated with the loT device.

15. A server for performing transactions comprising:
an input arranged to receive transaction data relating to a transaction between a merchant and a payment device;
a processor arranged to analyse the transaction data for the presence of a device identifier; determine from the device identifier if the payment device is an Internet of Things (loT) device and, in the event that the payment device is an loT device; compare the received transaction data against an loT device profile to determine if the transaction meets loT device profile rules;
an output arranged, in the event that the transaction meets the loT device profile rules, to forward the transaction data to an issuer entity.
